# EUROPÄISCHE PATENTSCHRIFT

(11) **EP 2 072 877 B1**
(45) Veröffentlichungstag und Bekanntmachung des Hinweises auf die Patenterteilung: **27.04.2011**
(21) Anmeldenummer: 08021569.2
(22) Anmeldetag: 12.12.2008
(51) Int. Cl.: F16L 21/00, F16L 25/00, F16L 25/14, F16L 49/02

(54) **Vorrichtung zum Verbinden von zwei Rohren mit unterschiedlichen Außendurchmessern**
Device for connecting two pipes with different external diameters
Dispositif destiné à raccorder deux tuyaux ayant différents diamètres extérieurs

(30) Priorität: 19.12.2007 DE 102007061288
(43) Veröffentlichungstag der Anmeldung: 24.06.2009
(73) Patentinhaber: Felber, Winfried, 86653 Monheim (DE)
(72) Erfinder: Felber, Winfried, 86653 Monheim (DE)
(74) Vertreter: Munk, Ludwig

(56) Entgegenhaltungen:
- DE-B- 1 211 045
- FR-A- 324 139
- GB-A- 1 180 209
- US-A- 1 974 813
- US-A- 4 186 948
- US-A- 4 380 348
- US-A- 4 491 350
- US-A- 5 039 137

## Beschreibung

Die Erfindung betrifft eine Vorrichtung zum Verbinden von zwei unterschiedliche Außendurchmesser aufweisenden Rohren mit einer die Stoßstelle zwischen den einander zugewandten Endbereichen der Rohre überspannenden Manschettenanordnung, die zumindest eine Fixiermanschette, auf der den beiden Rohren zugeordnete, umlaufende Spannschellen aufgenommen sind, und vorzugsweise eine von der Fixiermanschette umfasste Dichtmanschette aufweist.

Die Notwendigkeit zum Verbinden von Leitungen, insbesondere Rohren mit unterschiedlichen Außendurchmessern ergibt sich, wenn eine unterschiedliche Wandstärke aufweisende, z. B. aus unterschiedlichen Materialien bestehende Rohre vorliegen, was im Abwasser- und Sanitärbereich häufig vorkommt. Bei den bisher gebräuchlichen Anordnungen eingangs erwähnter Art finden dabei Ausgleichsringe Verwendung, mit denen der Durchmesserunterschied zwischen den beiden Leitungen ausgeglichen wird. Dies erweist sich jedoch als umständlich und unwirtschaftlich, da für unterschiedliche Durchmesserabstufungen unterschiedliche Ausgleichsringe bereit gehalten werden müssen. Die Ausgleichsringe befinden sich dabei radial innerhalb der Dichtmanschette und können daher auch die Dichtheit der Verbindung beeinträchtigen.

Aus der US-A 4 380 348 ergibt sich eine Rohrverbindung mit einer Fixiermanschette, der ein endliches Band mit bis zu einem erhöhten Mittelbereich geschlitzten Seitenflanken und mit einander überlappenden Enden zugrundeliegt. Im Falle einer Durchmesserverkleinerung besteht im Bereich der Seitenflanken infolge der dort vorgesehenen Schlitze ein gewisser Freiheitsgrad. Der mittlere Bereich kann hier jedoch einer größeren Durchmesseranpassung nur durch unkontrollierte Verformung und Relativbewegung der einander überlappenden Bandenden folgen. Diese würden sich im Falle einer größeren Durchmesseranpassung schräg zueinander verschieben, was zwangsläufig zu einer exzentrischen Verlagerung der Achse und damit zu Ungenauigkeiten führen würde. Die bekannte Anordnung ist daher nur zum Ausgleich kleinerer Durchmesserveränderungen zur Bewerkstelligung einer zuverlässigen Spannung der Spannschellen geeignet.

Die GB 1 118 209-A beschreibt eine Rohrverbindung mit einer als in sich geschlossener, umlaufender Ring ausgebildeten, eine Gummimanschette umfassenden Fixiermanschette, die in ihrem mittleren Bereich durch zwei umlaufende Rippen verstärkt ist und hieran anschließende, mit Kanälen für zugeordneten Spannschellen versehene, konisch nach außen erweiterte Seitenbereiche aufweist, die mit axialen, vom Bereich der inneren Begrenzung der Aufnahmekanäle für die Spannschellen bis zum Rand sich erstreckenden Schlitzen versehen sind. Im Falle einer Durchmesserverkleinerung werden die konischen Seitenbereiche zusammengedrückt, wobei zunächst eine zylindrische Form mit dem verstärkten Mittelbereich entsprechendem Durchmesser erreicht wird. Um größere Durchmesserunterschiede der miteinander zu verbindenden Rohre auszugleichen müsste ein Seitenbereich eine weitere Durchmesserverkleinerung hinnehmen. Da der verstärkte Mittelbereich praktisch nicht verformbar ist, würde dies zwangsläufig zu einer konischen Gestalt des weiter verformten Seitenbereichs und damit zu einer linienförmigen Anlage am kleineren Rohr führen.

Die US-A 5 039 137 zeigt eine weitere Rohrverbindung mit einer als in sich geschlossener Ring ausgebildeten Fixiermanschette, die aus einem ElastomerMaterial besteht und die entsprechend einer vorgegebenen Abstufung der Durchmesser der miteinander zu verbindenden Rohre vorgefertigt ist. Der mittlere, als konisches Übergangsstück ausgebildete Bereich dieser Fixiermanschette ist dabei so versteift, dass im Falle eines Anzugs der den Seitenbereichen zugeordneten Spannschellen eine Verformung unterbleibt. Die Seitenbereiche sind nicht geschlitzt und lediglich aufgrund der Materialelastizität verformbar. Im Falle größerer Durchmesseränderungen ergäben sich unkontrollierte Verformungen inform von Verbeulungen und Verknautschungen. Die durch die Materialelastizität gegebene Verformbarkeit dient lediglich dazu, beim Anzug der Spannschellen einen Druck aufbauen zu können.

Die US-A 4 491 350 zeigt unter anderem ebenfalls eine Rohrverbindung mit einer als in sich geschlossener Ring ausgebildeten Fixiermanschette, die eine Gummimanschette umfasst, die ihrerseits randseitig verstärkt ist und den Rand der Fixiermanschette umgreift. Diese besitzt randseitig angeordnete Radialflansche, die in die Verstärkung der Gummimanschette eingreifen, sowie durch Sicken begrenzte Kanäle für umlaufende Spannschellen. Die seitlichen Bereiche dieser Fixiermanschette sind mit axialen Schlitzen versehen, die jeweils vorn Rand bis über den zugeordneten Kanal für eine Spannschelle hinaus in den Mittelbereich hinein reichen. Zwischen den einander gegenüberliegenden, inneren Enden der Schlitze verbleibt jedoch auch ein größerer, ungeschlitzter Mittelbereich. Im Falle einer Durchmesserverkleinerung kann in den geschlitzten Bereichen eine Anpassung erfolgen, die im Bereich innerhalb der den Spannschellen zugeordneten Kanäle, soweit dort die Schlitze reichen, unter Umständen zu einer konischen Form führen kann. Im daran anschließenden, breiteren, ungeschlitzten Mittelbereich wären jedoch unkontrollierte Verbeulungen bzw. Verknautschungen zu erwarten. Auch diese bekannte Anordnung dient daher lediglich zur Bewerkstelligung kleinerer Durchmesseränderungen zum Aufbau einer Spannung beim Anzug der Spannschellen. Größeren Durchmesseränderungen würde hier bereits die die seitlichen Ränder umfassende Verstärkung der Gummimanschette entgegenwirken.

Die DE-B 1 211 045 zeigt wiederum eine Rohrverbindung mit einer als endliches Band ausgebildeten Fixiermanschette. Dieses ist randseitig mit nach radial außen und radial innen gebogenen Klauen versehen und besitzt von der Seite bis zu einem ungeschlitzten Mittelbereich reichende Schlitze. Die nach radial innen gebogenen Klauen liegen am Außenumfang der miteinander zu verbindenden Rohre an und stehen dementsprechend einer größeren Durchmesseränderung entgegen. Diese bekannte Anordnung dient zur Verbindung von Rohren mit nach außen konisch sich erweiternden Enden. Dementsprechend ist die Fixiermanschette doppelkonisch vorgeformt. Eine Verformung findet lediglich in dem Maße statt, dass beim Anzug der Spannschellen ein Druck aufgebaut wird. Im Falle größerer Durchmesseranpassungen ergäben sich im ungeschlitzten Mittelbereich unkontrollierte Verbeulungen und Verknautschungen.

Hiervon ausgehend ist es die Aufgabe der vorliegenden Erfindung, eine Vorrichtung zum Verbinden von zwei Rohren mit unterschiedlichen Außendurchmessern zu schaffen, die auch bei großen Durchmesserunterschieden ohne Ausgleichsringe auskommt und dennoch eine hohe Sicherheit und Genauigkeit bietet.

Eine erste Lösung dieser Aufgabe ist im Anspruch 1 angegeben.

Eine zweite Lösung dieser Aufgabe ist im Anspruch 14 angegeben.

Bei der ersten Lösung ist die Fixiermanschette als einen in sich geschlossenen, umlaufenden Ring bildender Federkorb ausgebildet, der nicht nur in den seitlichen Anlagebereichen, sondern auch in seinem die seitlichen Anlagebereiche verbindenden Mittelbereich für eine dreidimensionale Formänderung eingerichtet ist. Bei der zweiten Lösung besteht die als in sich geschlossener, umlaufender Ring ausgebildete Fixiermanschette aus mit Drehfreiheitsgrad bezüglich einer radialen Achse aneinander anschließenden Umfangssegmenten mit über Sollbiegebereiche mit den seitlichen Anlagebereichen verbundenen Mittelbereich. In jedem Fall ergibt sich eine durchmesservariable Manschettenanordnung mit einer als in sich geschlossener, umlaufender Ring ausgebildeten Fixiermanschette, die an unterschiedliche, vergleichsweise große Durchmesserabstufungen anpassbar ist. Die erfindungsgemäßen Vorrichtungen sind daher für eine Vielzahl von Anwendungsfällen geeignet, was die Lagerhaltung vereinfacht und eine rationelle Herstellung ermöglicht. Die Fixiermanschette besitzt in jedem Fall an die unterschiedlichen Durchmesser anpassbare, zylindrische Anlagebereiche und einen konisch sich einstellenden Mittelbereich. In jedem Fall ergibt sich dabei eine zuverlässige Selbstzentrierung sowie eine zuverlässige Querkraftübertragung. Mit den erfindungsgemäßen Maßnahmen werden daher die

Nachteile der bekannten Anordnung vollständig vermieden.

Vorteilhafte Ausgestaltungen und zweckmäßige Fortbildungen der übergeordneten Maßnahmen sind in den Unteransprüchen angegeben.

Eine besonders zweckmäßige Anordnung kann darin bestehen, dass der Federkorb beidseitig über seinen Umfang verteilte, randseitig offene, bis zum Mittelbereich reichende Randeinschnitte und im Wechsel hiermit angeodnete, randseitig geschlossene, aber zumindest über einen größeren Teil des Mittelbereichs, vorzugsweise über den ganzen Mittelbereich sich erstreckende Innenschlitze aufweist, wobei die Randeinschnitte der einen Seite den Innenschlitzen der anderen Seite gegenüberliegend ungeordnet sein können. Diese Maßnahmen gewährleisten eine hohe Stabilität. Dennoch ist die gewünschte raumgebende Anordnung sichergestellt.

Eine weitere vorteilhafte Maßnahme kann darin bestehen, dass durch die Randeinschnitte voneinander getrennte, axiale Vorsprünge gebildet werden, die im Bereich ihrer axial äußeren Enden ein den zugeordneten Innenschlitz verschließendes, eine radiale Erstreckung aufweisendes Endstück aufweisen. Die Endstücke ermöglichen in vorteilhafter Weise nicht nur eine Bildung von den Spannschellen zugeordneten Umlaufkanälen, sondern in vorteilhafter Weise auch eine formschlüssige Verbindung mit einer Dichtmanschette, so dass diese infolge ihrer Einspannung bei einer Verformung der Fixiermanschette durch diese mitgenommen wird.

Gemäß einer bevorzugten Ausgestaltung der übergeordneten Maßnahmen kann der Mittelbereich der Fixiermanschette gegenüber den seitlichen Anlagebereichen erhöht und durch seitliche Sollbiegebereiche oder Gelenke hiermit verbunden sein. Diese Maßnahmen begünstigen die erwünschte konische Einstellung des Mittelbereichs.

Eine weitere vorteilhafte Ausgestaltung der übergeordneten Maßnahmen kann darin bestehen, dass zumindest die über den Mittelbereich der Fixiermanschette sich erstreckenden Dehnungsschlitze durch eine faltenbalgartige Membrane überbrückt sind und dass jedem vom Mittelbereich abstehenden Anlagebereich eine am jeweils zugeordneten Rohr zur Anlage kommende Dichtung zugeordnet ist. Durch die Membranen werden die zugeordneten Dehnungsschlitze verschlossen, ohne die durch die Dehnungsschlitze bewerkstelligte Beweglichkeit zu behindern. Der den Stoßbereich zwischen den beiden Rohren überbrückende Mittelbereich der Fixiermanschette lässt sich dabei einfach durch den Anlagebereichen zugeordnete, an den Rohren zur Anlage kommende Dichtungen abdichten. Auf eine Dichtmanschette kann dabei verzichtet werden. Dennoch ist eine dichte Anordnung erreichbar. Gemäß einer ersten Ausführung können nur die Innenschlitze durch eine faltenbalkartige Membrane überbrückt sein, wobei zwischen den durch eine Membrane überbrückten Innenschlitzen und den freien Randeinschnitten eine mäanderartig verlaufende Dichtschnur vorgesehen sein kann. Eine weitere Ausführung kann darin bestehen, dass alle durch Randeinschnitte und Innenschlitze gebildeten Dehnungsschlitze durch eine faltenbalgartige Membrane überbrückt sind, wobei im Bereich der vom Mittelbereich abgewandten Enden der seitlichen Anlagebereiche jeweils ein in einen zugeordneten Kanal einlegbarer, umlaufender Dichtring vorgesehen ist, der an den benachbarten Stirnseiten der kanalseitig offenen Membranen anliegt.

In weiterer Fortbildung der übergeordneten Maßnahmen kann der die Fixiermanschette bildende Federkorb aus mehreren zu einem Ring zusammenschließbaren Ringsegmenten bestehen, wobei die Mittelbereiche und die axialen Vorsprünge einander benachbarter Ringsegmente durch Steckverbindungen mit vorzugsweise quer zueinander verlaufenden Steckrichtungen aneinander ansteckbar und vorzugsweise miteinander verrastbar sind. Hierbei lässt sich in vorteilhafter Weise durch Verwendung von mehr oder weniger Umfangssegmenten die Manschettengröße variieren. Da stets dieselben Umfangssegmente Verwendung finden können, ergeben sich hier besonders große Stückzahlen und damit eine besonders günstige Herstellung und einfache Lagerhaltung. Eine weitere besonders zu bevorzugende Maßnahme kann darin bestehen, dass die den Anlagebereichen der Fixiermanschette zugeordneten Spannschellen jeweils aus wenigstens zwei Segmenten bestehen, die zusammen einen Bogenwinkel von mehr als 360° ergeben, wobei ein Segment im Bereich eines Endes mit das andere Segment umgreifenden Spanngurten und im Bereich des anderen Endes mit den zugewandten freien Enden der Spanngurte zugeordneten Haltern oder Spannern versehen ist. Diese Maßnahmen verhindern in vorteilhafter Weise eine Sehnenbildung im Bereich der Spannschellen und begünstigen damit in vorteilhafter Weise eine gleichmäßige radiale Bewegung auf dem ganzen Umfang. Dies begünstigt in vorteilhafter Weise die Erzielung einer exakten Fluchtung der miteinander zu verbindenden Rohre.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar. In der nachstehend beschriebenen Zeichnung zeigen:
- Figur 1: eine erfindungsgemäße Rohrverbindung mit einer als umlaufender Federkorb ausgebildeten Fixiermanschette in aufgeschnittener Darstellung,
- Figur 2: eine Abwicklung der Anordnung gemäß Figur 1 in explosionsartiger Darstellung,
- Figur 3: einen Querschnitt einer bevorzugten Ausführung der Fixiermanschette,
- Figur 4: eine erfindungemäße Rohrverbindung mit einer aus zusammengesteckten Umfangssegmenten gebildeten Fixiermanschette in aufgeschnittener Darstellung und
- Figur 5: eine Draufsicht auf zwei aufeinanderfolgende Umfangssegmente der Anordnung gemäß Figur 4,
- Figur 6: eine perspektivische Darstellung eines durch aneinander angesteckte Ringsegmente gebildeten Federkorbs,
- Figur 7: eine Ansicht eines einzelnen Ringsegments der Anordnung gemäß Figur 6,
- Figur 8: eine schematische Darstellung einer Ausführung mit nur durch Randeinschnitte gebildeten Dehnungsschlitzen,
- Figur 9: eine Ansicht einer mehrteiligen Spannschelle,
- Figur 10: eine Alternative zum Querschnitt gemäß Figur 3,
- Figur 11: eine Alternative zur Ausführung gemäß Figur 7,
- Figur 12: eine Innenansicht der Anordnung gemäß Figur 11,
- Figur 13: einen Querschnitt durch eine zur Ausführung gemäß Figuren 11 und 12 passende Dichtmanschette,
- Figur 14: ein Beispiel für eine Ausführung mit durch Gelenke mit dem Mittelbereich verbundenen axialen Vorsprüngen,
- Figur 15: eine Ansicht einer Fixiermanschette mit durch faltenbalgartige Membranen verschlossenen Dehnungsschlitzen,
- Figur 16: einen Querschnitt durch die Anordnung gemäß Figur 15,
- Figur 17: eine Draufsicht auf die Anordnung gemäß Figur 15 von innen und
- Figur 18: eine Alternative zur Ausführung gemäß Figuren 15 bis 17.

Hauptanwendungsgebiet der Erfindung ist der Abwasser- und Sanitärbereich, da hier vielfach aus unterschiedlichen Materialien bestehende Rohre aneinander angeschlossen werden müssen, die zwar einen gleichen Innendurchmesser aber verschiedene Außendurchmesser aufweisen. Die Erfindung ist jedoch hierauf nicht beschränkt.

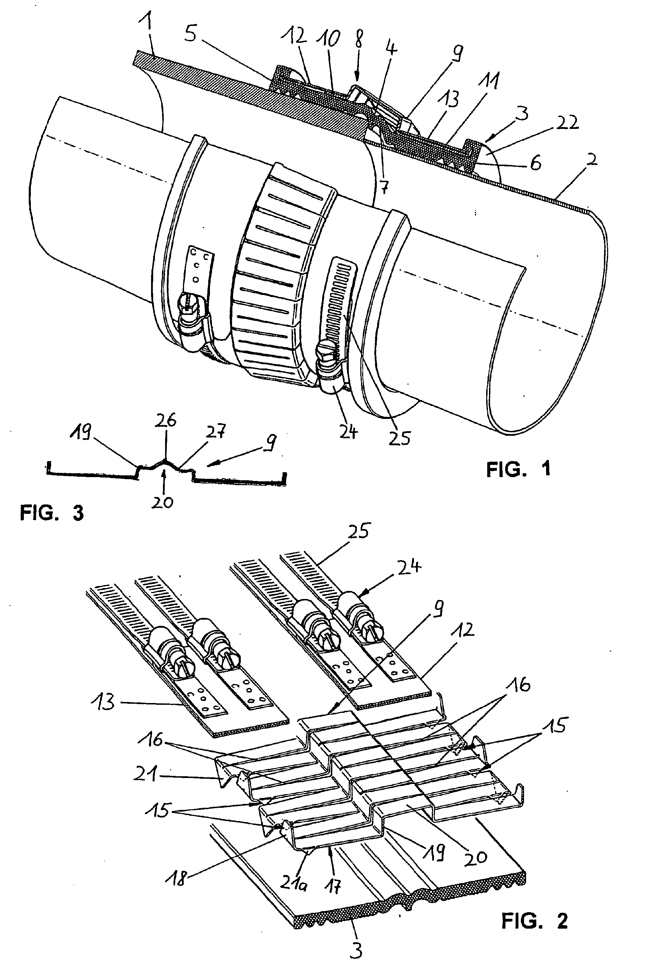

Dem in Figur 1 dargestellten Beispiel liegt eine Verbindung eines Steinzeugrohrs 1 mit einem eine wesentlich geringere Wandstärke aufweisenden Kunststoffrohr 2 zugrunde. Die Rohre 1, 2 besitzen gleiche Innendurchmesser und werden koaxial aneinander angesetzt. In Folge der unterschiedlichen Wandstärke ergibt sich im Stoßbereich eine umlaufende, äußere Stufe.

Die Rohre 1, 2 liegen im dargestellten Beispiel aus zeichnerischen Gründen mit stumpfem Stoß aneinander an. In der Praxis ist jedoch ein kleiner Dehnungsspalt vorgesehen. Um die erforderliche Dichtheit im Stoßbereich zu gewährleisten, ist im vorliegenden Beispiel eine aus Gummi oder gummiähnlichem Werkstoff bestehende Dichtmanschette 3 vorgesehen, die auf die einander zugewandten Endbereiche der beiden Rohre 1, 2 aufgezogen ist und den Stoßbereich überspannt. Die Dichtmanschette 3 ist zweckmäßig mit einem durch einen Innenbund gebildeten Anschlag 4 versehen, der an der Stirnseite des dickeren Rohrs, hier des Steinzeugrohrs 1 zur Anlage bringbar ist.

Die Dichtmanschette 3 enthält den Rohren 1, 2 zugeordnete, seitliche Anlagebereiche 5, 6. mit zylindrischer Konfiguration, die direkt, d.h. ohne Zwischenschaltung von Ausgleichsringen, an der Außenoberfläche des jeweils zugeordneten Rohrs zur Anlage kommen. Die seitlichen Anlagebereiche 5, 6 werden durch einen zwecks Verformbarkeit querschnittsmäßig etwas geschwächten, mit den Anschlag 4 flankierenden, nach radial außen gerichteten Wölbungen versehenen Mittelbereich 7 verbunden, der in der dargestellten Montagestellung entsprechend der Abstufung der Außendurchmesser der Rohe 1, 2 konisch verformt wird. Der Durchmesser der auf die Rohre 1, 2 aufziehbaren Anlagebereiche 5, 6 passt sich ausgehend von einem Mittelwert durch Dehnung oder Pressung dem jeweiligen Rohrdurchmesser an. Es ist aber auch denkbar, die Dichtmanschette 3 ausgehend vom größeren Durchmesser auf den kleineren Durchmesser zusammenzudrücken.

Auf dem Außenumfang der Dichtmanschette 3 ist eine aus metallischem Werkstoff und/oder Kunststoff bestehende, umlaufende Fixiermanschette 8 angeordnet, welche die Rohrverbindung stabilisiert, d.h. die Koaxialität der Rohre 1, 2 gewährleistet und Querkräfte übertragen kann. Die Fixiermanschette 8 besitzt einen den Mittelbereich 7 der Dichtmanschette 3 übergreifenden, in der dargestellten Montagestellung zu einem Konusabschnitt verformten Mittelbereich 9 und seitlich hieran anschließende, den Anlagebereichen 5, 6 der Dichtmanschette 3 zugeordnete, seitliche Anlagebereiche 10, 11. Zum Spannen der Fixiermanschette 8 und Pressen der Dichtmanschette 3 sind umlaufende Spannschellen 12, 13 vorgesehen, die in zugeordnete, durch die Anlagebereiche 10, 11 der Fixiermanschette 8 gebildete Aufnahmekanäle einlegbar sind.

Die Fixiermanschette 8 kann als ringförmig umlaufender Federkorb, das heißt als Muffen- oder Ringfeder ausgebildet sein, die für eine dreidimensionale Formänderung eingerichtet ist. Der die Fixiermanschette 8 bildende Federkorb ist im den Figuren 1 und 2 zugrundeliegenden Beispiel aus einem streifenförmigen Vorprodukt hergestellt, das zu einem Ring gebogen und dessen Enden miteinander verbunden, vorzugsweise miteinander verschweißt sind. Das streifenförmige Vorprodukt kann als aus Metall und/oder Kunststoff bestehender Stanzformling oder Spritzgußformling hergestellt werden. Der die Fixiermanschette 8 bildende Federkorb ist mit gleichmäßig über seinen Umfang verteilten, axialen Dehnungsschlitzen versehen, die ausreichend Raum für die gewünschte dreidimensionale Verformbarkeit geben können. Der Begriff Dehnungsschlitze ist dabei so zu verstehen, dass sowohl eine Dehnung als auch eine Stauchung möglich ist. Da diese Verformbarkeit bei einer Anpassung an unterschiedliche Außendurchmesser der miteinander zu verbindenden Rohre 1, 2 auf der ganzen axialen Länge der Fixiermanschette 8 gewährleistet sein muss, sind dem Mittelbereich 9 und den seitlichen Anlagebereichen 10, 11 zugeordnete, axiale Dehnungsschlitze vorgesehen. Dabei kann es sich um gleiche oder unterschiedliche Dehnungsschlitze handeln.

Bei der Ausführung gemäß Figur 2 ist der die Fixiermanschette 8 bildende Ring mit gleichmäßig über seinen Umfang verteilten, randseitig offenen, vom seitlichen Rand bis zum Mittelbereich 9 reichenden, erste Dehnungsschlitze bildenden Randeinschnitte 15 versehen, die im Wechsel mit an beiden Enden geschlossenen, parallelen, zweite Dehnungsschlitze bildenden Innenschlitzen 16 angeordnet sind. Die Innenschlitze 16 erstrecken sich, wie Figur 2 weiter erkennen lässt, über den Mittelbereich 9 zumindest über einen größeren Teil des Mittelbereichs 9 vorzugsweise über den ganzen Mittelbereich 9 hinweg, und reichen bis zum Randbereich der Anlagebereiche 10, 11, so dass auf der ganzen axialen Länge der Fixiermanschette 8 genügend Raum für die erforderliche dreidimensionale Verformung gegeben werden kann. Die Ausbildung ist zweckmäßig bezüglich einer mittleren Radialebene punktsymmetrisch, so dass jede Seite aufgeweitet bzw. kontraktiert und daher dem größeren oder kleineren Außendurchmesser zugeordnet werden kann, was die Montage erleichtert. Durch die Randeinschnitte 15 werden seitliche, das heißt in der Montagestellung in axialer Richtung verlaufende Vorsprünge 17 gebildet, die durch die Innenschlitze 16 in zwei Äste unterteilt werden, welche randseitig über ein fahnenartiges Endstück 18 zusammenhängen.

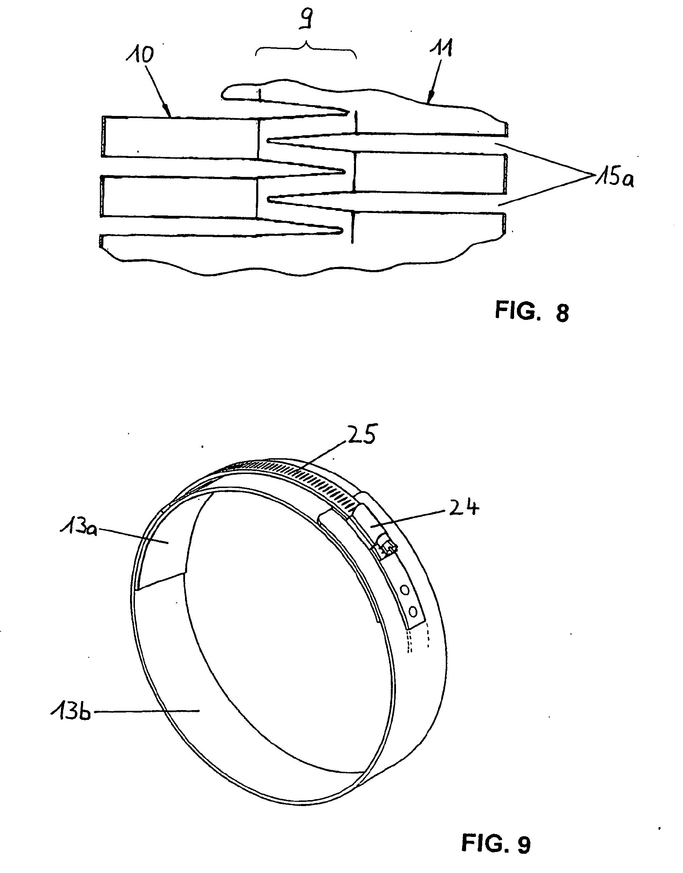

Die der Figur 2 zugrundeliegende Ausführung mit Randeinschnitten 15 und Innenschlitzen 16 erweist sich als besonders bevorzugte Ausführung. Zur Vereinfachung wäre es jedoch auch denkbar, nur als Randeinschnitte ausgebildete Dehnungsschlitze vorzusehen. Eine derartige Alternative ist in Figur 8 gezeigt. Dabei ist der der Fixiermanschette 8 zugrundeliegende Ring von beiden Seiten her mit axialen Randeinschnitten 15a versehen, die sich jeweils über einen seitlichen Anlagebereich 10 bzw. 11 und den Mittelbereich 9 erstrecken, wobei die den beiden Seiten zugeordneten, gegenläufigen Randeinschnitte 15a in Umfangsrichtung etwa um die Hälfte des Abstands benachbarter Randeinschnitte 15a gegeneinander versetzt sind, so dass im Mittelbereich 9 die gewünschte Überlappung bzw. Verzahnung möglich ist.

In Figur 2 sind die Randeinschnitte 15 sind vom seitlichen Rand ausgehend nach innen v-förmig verengt. Die Innenschlitze 16 besitzen dort die größte lichte Weite, wo die Randeinschnitte 15 ihre kleinste lichte Weite aufweisen. Die Innenschlitze 16 sind dementsprechend vom axialen Bereich des inneren Endes der Randeinschnitte 15 ausgehend nach beiden Seiten v-förmig verengt. Die v-förmige Konfiguration der Randeinschnitte 15 und Innenschlitze 16 ermöglicht die erforderliche Durchmesserkontraktion im Bereich des dünneren Rohrs. Die Randeinschnitte 15 und Innenschlitze 16 der beiden Seiten des hier die Fixiermanschette 8 bildenden Federkorbs sind so gegeneinander versetzt, dass die Randeinschnitte 15 der einen Seite den Innenschlitzen 16 der anderen Seite gegenüber liegen. Die einander zugewandten Enden der einander gegenüberliegenden Randeinschnitte 15 und Innenschlitze 16 liegt dementsprechend nahe beieinander.

Der Mittelbereich 9 des die Fixiermanschette 8 bildenden Federkorbs ist, wie die Figuren 1 und 2 anschaulich erkennen lassen, portalförmig erhöht, so dass sich aufgestellte seitliche Randstege 19 ergeben, die durch einen Mittelsteg 20 überbrückt sind. Die Randeinschnitte 15 enden dabei im Bereich des unteren Endes, vorzugsweise mit geringem Abstand hiervon. Die gegenüberliegenden Innenschlitze 16 enden hier im Bereich des oberen Endes der Randstege 19. Der Abstand zwischen den einander zugewandten Enden von einander gegenüberliegenden Randeinschnitten 15 und Innenschlitzen 16 entspricht daher hier lediglich der Breite des Randstegs 19. Vorzugsweise sind die Innenschlitze 16 etwas kürzer und enden bereits im Bereich des Mittelbereichs 9.

Die oben erwähnen, die Innenschlitze randseitig begrenzenden, fahnenartigen Endstücke 18 können zur Bildung radialer Vorsprünge in radialer Richtung umgebogen sein. Bei dem der Figur 2 zugrundeliegenden Beispiel sind die aufeinanderfolgenden Endstücke 18 abwechselnd nach radial innen bzw. außen umgebogen. Die so gebildeten, nach radial innen weisenden Vorsprünge können dabei zweckmäßig als spitze Zähne 21 ausgebildet sein, die zum Eingriff mit der Außenoberfläche des jeweils zugeordneten Rohrs bringbar sind, was die Herstellung einer zugfesten Verbindung ermöglicht. Die nach radial innen gebogenen Vorsprünge können die Dichtmanschette 3 an ihren axialen Enden umgreifen oder in zugeordnete, in Figur 2 jedoch nicht gezeigte Ausnehmungen der Dichtmanschette 3 eingreifen. Die nach radial außen gerichteten Vorsprünge können zweckmäßig zum Eingriff mit der Dichtmanschette 3 gebracht werden, was die koaxiale Ausrichtung der beiden Seiten der Fixiermanschette 9 begünstigt. Hierzu kann die Dichtmanschette 3, wie aus Figur 1 ersichtlich ist, im Bereich ihrer beiden Enden jeweils einen nach radial außen vorspringenden Bund 22 aufweisen, der mit einem im Querschnitt L-förmigen, vom benachbarten Auflagebereich ausgehenden Schlitz versehen ist, in den die nach radial außen weisenden Vorsprünge eingreifen können. Die nach radial außen gebogenen Vorsprünge bilden zusammen mit den parallelen Randstegen 19 des Mittelbereichs 9 auch die den Spannschellen 11, 12 zugeordneten Aufnahmekanäle.

Im dargestellten Beispiel sind, wie aus Figur 2 ersichtlich ist, im axialen Endbereich der Seitenkanten der Vorsprünge 17 nach radial innen gerichtete, zahnartige Vorsprünge 21a angeformt. Diese sollen sich in die Dichtmanschette 3 eindrücken und damit eine gleichförmige Verformung von Dichtmanschette 3 und Fixiermanschette 8 bewirken. Demselben Zweck dient auch der oben erwähnte Umgriff der durch die Endstücke 18 gebildeten Vorsprung bzw. insbesondere deren Eingriff in zugeordnete Ausnehmungen.

Der Mittelbereich 9 des die Fixiermanschette 8 bildenden Federkorbs ist, wie oben schon erwähnt, zweckmäßig portalartig erhöht, so dass sich die in radialer Richtung aufragenden Seitenstege 19 ergeben, die zusammen mit den parallelen äußeren Vorsprüngen 18 die Aufnahmekanäle für die Spannschellen 12, 13 begrenzen. Dabei können die Knickkanten zwischen den Seitenstegen 19 und den Vorsprüngen 17 sowie zwischen den Seitenstegen 19 und den Mittelstegen 20 als durch eine geeignete Schwächung erzielte Sollbiegebereiche ausgebildet sein.

Die Spannschellen 12, 13 werden durch umlaufende Bänder aus Blech oder Kunststoff gebildet, deren einander überlappende Enden einerseits mit wenigstens einem Spanner, hier in Form eines über einen Schraubenkopf betätigbaren Vortriebsorgans 24, beispielsweise in Form einer drehbaren Schnecke, und andererseits mit einem Spanngurt 25 versehen sind, der mit einer mit dem Spanner bzw. Vortriebsorgan 24 zum Eingriff bringbaren Zahnstangenprofilierung versehen ist. Pro Spannschelle 12, 13 ist, wie in Figur 1 angedeutet ist, mindestens ein Vortriebsorgan 24 und ein Spanngurt 25 vorgesehen. Selbstverständlich können aber auch mehrere derartige Spanneinrichtungen nebeneinander vorgesehen sein, wie in Figur 2 dargestellt ist.

Die Spannschellen 13 können einteilig über den ganzen Umfang umlaufend ausgebildet sein. Vorzugsweise sind die Spannschellen 12, 13 jedoch mehrteilig ausgebildet, wie in Figur 9 angedeutet ist. Die der Figur 9 zugrundeliegende Spannschelle besteht aus zwei Ringsegmenten 13a, 13b, die ineinander eingesetzt sind und zusammen einen Bogenwinkel von mehr als 360° ergeben, so dass sich eine Überlappung der gegenseitigen Enden ergibt. Der Spanngurt 25 und das zugeordnete Vortriebsorgan 24 sind nur einem Segment, hier dem Ringsegment 13b zugeordnet. Das Ringsegment 13a ist in das Ringsegment 13b eingesetzt und vom Spanngurt 25 umfasst. Beim Anziehen des Spanngurts 25 gleiten die einander überlappenden Enden der Ringsegmente 13a, 13b aufeinander, wobei die kreisförmige Konfiguration des gesamten Rings erhalten bleibt und einer Streckung des Spanngurts 25 inform einer Sehne entgegengewirkt wird. Die genannten Maßnahmen begünstigen daher die Erzielung einer exakten Fluchtung der miteinander zu verbindenden Rohre 1, 2.

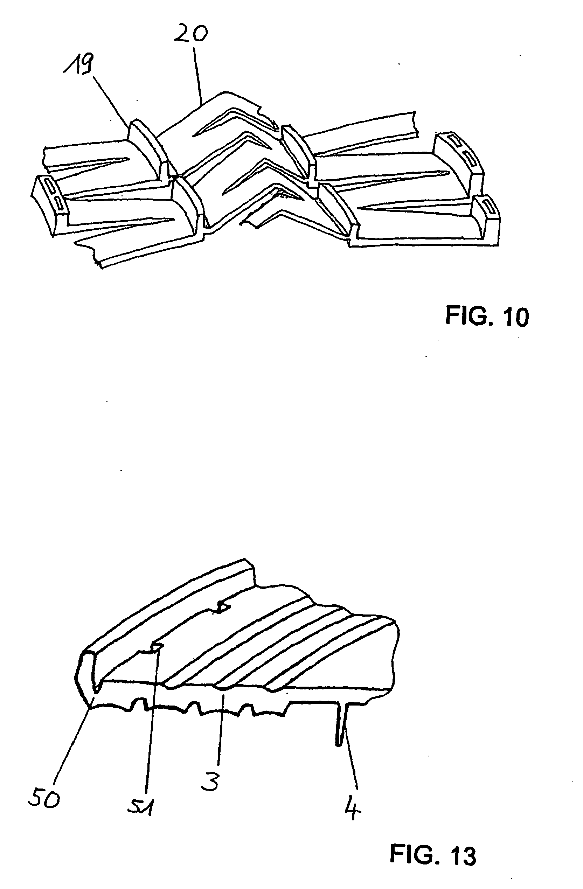

Bei der den Figuren 1 und 2 zugrunde liegenden Ausführung ist der Mittelsteg 20 des Mittelbereichs 9 des Federkorbs als ebene Lasche ausgebildet. Zweckmäßig kann jedoch eine Ausführung gemäß Figur 3 gewählt werden. Hierbei besitzt der Mittelsteg 20 einen mittleren, erhöhten Kammbereich 26, der von zwei nach innen gewölbten Seitenbereichen 27 flankiert ist, die an die gewölbten Bereiche 7 der Dichtmanschette angepasst sind und diese im montierten Zustand in Stellung halten können, ohne unerwünschte Scherkräfte auf die Dichtmanschette 3 auszuüben. In Figur 3 schließen der Seitensteg 19 und der Mittelsteg 20 mit ihren Enden aneinander an, was sich bei einer gestanzten Ausführung automatisch ergibt. Bei einer gespritzten bzw. gegossenen Ausführung könnte der Ansatz des Mittelstegs 20 auch tiefer gelegt sein, wie in Figur 10 angedeutet ist. Die Höhe des Seitenstegs 19 entspricht dabei der gewünschten Höhe zur Bildung eines für die zugeordnete Spannschelle bzw. Spannschellen geeigneten Kanals. Der Mittelbereich 20 schließt etwa auf dem Niveau der Sohle des genannten Kanals an den Seitensteg 19 an. Eine derartige Ausführung begünstigt eine zuverlässige Übertragung von Scherkräften. Im Ansatzbereich des Mittelstegs 20 können hier ebenfalls durch geeignete Schwächung etc. gebildete Sollbiegebereiche oben genannter Art vorgesehen sein.

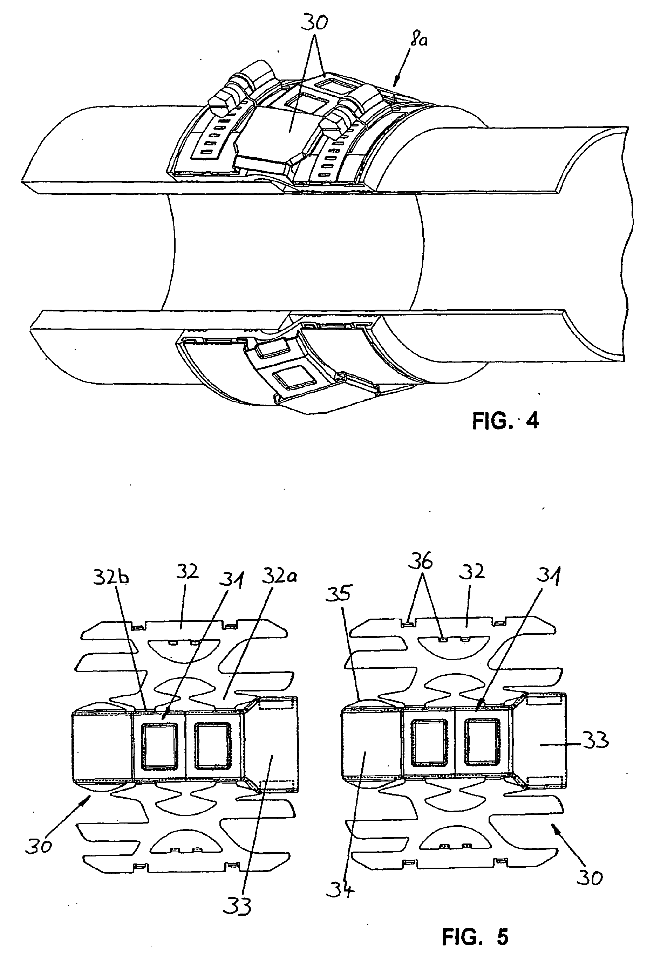

Der grundsätzliche Aufbau der nachstehend beschriebenen, den Figuren 4 und 5 zugrunde liegenden Ausführung entspricht dem grundsätzlichen Aufbau des oben beschriebenen Ausführungsbeispiels der Figuren 1 bis 3. Nachstehend wird daher in erster Linie auf die Unterschiede eingegangen. Bei dem den Figuren 4 und 5 zugrunde liegenden Beispiel besteht die Fixiermanschette 8a aus in Umfangsrichtung aufeinander folgenden, um eine radiale Achse gegeneinander verdrehbaren und dementsprechend mit entsprechendem Drehfreiheitsgrad angeordneten Umfangssegmenten 30. Diese sind mit ihren einander zugewandten Endbereichen drehbar aneinander anschließbar und bilden dementsprechend einen in sich geschlossenen umlaufenden Ring. Im dargestellten Beispiel sind die in Umfangsrichtung aufeinander folgenden Umfangssegmente 30 mit ihren einander zugewandten Endbereichen aneinander ansteckbar.

Die Umfangssegmente 30 besitzen einen den in der Montagestellung konisch sich einstellenden Mittelbereich der Fixiermanschette 8a bildenden Mittelsteg 31, von dem, wie am besten aus Figur 5 erkennbar ist, Seitenflügel 32 abstehen, die in axiale Richtung weisen. Die Umfangssegmente 30 sind im Bereich ihrer vorzugsweise durch entsprechende Formgebung, wie Sicken etc. versteiften Mittelstege 31 aneinander ansteckbar. Die Seitenflügel 32 können im angesteckten Zustand verzahnungsartig ineinander eingreifende Randprofilierungen ihrer axialen Ränder aufweisen. Die Mittelstege 31 sind einerseits mit einer Steckmuffe 33 und andererseits mit einer entsprechend angepassten Steckzunge 34 versehen, so dass aufeinanderfolgende Umfangssegmente 30 durch Einstecken der Steckzunge 34 in die benachbarte Steckmuffe 33 aneinander anschließbar sind. Die Steckzungen 34 sind mit konvex gebogenen Seitenflanken 35 versehen, so dass sich eine Art Gelenkverbindung ergibt, wobei die Steckzungen 34 in jeder Drehstellung mit zwei Punkten an einander gegenüberliegenden Flanken der zugeordneten Steckmuffe 33 anliegen. Die Seitenflügel 32 können mit durch umgebogene Laschen gebildeten, radialen Vorsprüngen 36 versehen sein, wobei die nach radial außen weisenden Vorsprünge 36 Aufnahmekanäle für die Spannschellen 12, 13 bilden und die nach radial innen gebogenen Vorsprünge 36 die Dichtmanschette 3 seitlich einfassen und/oder mit dem zugeordneten Rohr zum Eingriff gebracht werden können. Der maximal mögliche Schwenkwinkel kann durch Anschläge begrenzt sein.

Die die Fixiermanschette 8a bildenden Umfangselemente 30 werden zweckmäßig als Stanzteile aus Metall hergestellt. Auch eine Ausbildung als Kunststoff-Spritzgussformlinge wäre denkbar. In jedem Fall sind die Seitenflügel 32 so gelocht bzw. ausgenommen, dass sie mit schmalen Stegen 32a an den Mittelsteg 31 anschließen. Die schmalen Stege 32a bilden dabei die erwünschten Sollbiegebereiche. Um dies noch zu steigern, können die Stege 32a an ihren mittelstegseitigen Enden mit Schwächungen 32b versehen sein.

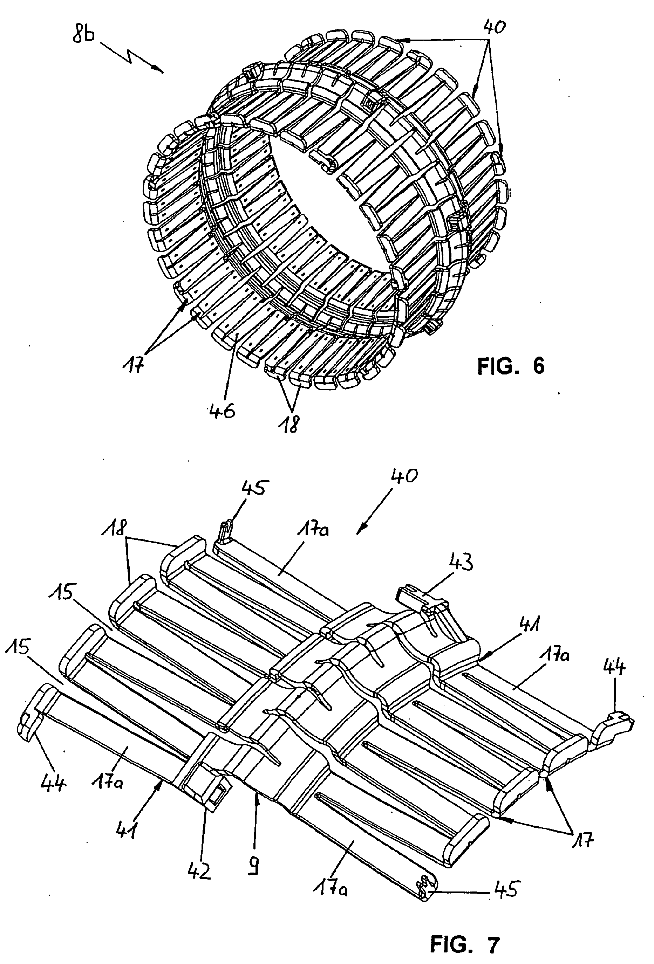

Es ist auch denkbar, einen Federkorb der aus den Figuren 1 und 2 entnehmbaren Art aus mehreren miteinander verbindbaren Ringsegmenten zu bilden. Eine derartige Ausführung liegt den Figuren 6 und 7 zugrunde.

Die Figur 6 zeigt eine perspektivische Darstellung einer durch einen umlaufenden Federkorb gebildeten Fixiermanschette 8b, wobei der Federkorb aus mehreren, zu einem geschlossenen Ring zusammengeschlossenen Ringsegmenten 40 besteht. Die Ringsegmente 40 sind zweckmäßig lösbar aneinander festlegbar. Im dargestellten Beispiel sind die Ringsegmente 40 in axialer Richtung aneinander ansteckbar und zur gegenseitigen Fixierung miteinander verrastbar.

Die in axialer Richtung aneinander ansteckbaren Ringsegmente 40 sind, wie aus Figur 7 ersichtlich ist, im Bereich ihrer einander gegenüberliegenden, umfangsseitigen Ränder im Mittelbereich 50 abgestuft, dass sich diametral einander gegenüberliegende umfangsseitige Vorsprünge 41 ergeben. Dabei sind im Bereich der im Mittelbereich vorhandenen Stufe einander zugeordnete Steckorgane vorgesehen, die einerseits als Muffe 42 und andererseits als in eine derartige Muffe 42 eines benachbarten Ringsegments 40 einsteckbare Steckzunge 43 ausgebildet sind. Diese Steckorgane sind dabei so gestaltet, dass ein gegenseitiger Rastverschluss erzielbar ist. Ebenso sind an den axialen Enden der die diametral einander gegenüberliegenden Stufen begrenzenden Elemente ebenfalls Steckorgane in Form von Ösen 44 und Einsteckzungen 45 vorgesehen, die im Gegensatz zu den in axialer Richtung sich erstreckenden Steckorganen 42, 43 in radialer Richtung zum Eingriff mit zugeordneten Steckorganen der jeweils benachbarten Ringsegmente bringbar sind, was aufgrund der federnden Eigenschaften der axialen Vorsprünge bzw. hier Teilvorsprünge 17a möglich ist. Die oben erwähnte Abstufung ist so gewählt, dass sie jeweils eine Hälfte eines durch randseitige Einschnitte 15 begrenzten Vorsprungs 17 umfasst. Die den einander gegenüberliegenden Steckelementen 44, 45 zugeordneten Teilvorsprünge 17a sind dementsprechend um eine halbe Vorsprungsbreite gegeneinander in Umfangsrichtung versetzt. Auch die Steckelemente 44, 45 sind zweckmäßig zur gegenseitigen Fixierung miteinander verrastbar.

Im dargestellten Beispiel sind alle Vorsprünge 17 mit nach radial außen weisenden Endstücken 18 versehen. Gleichzeitig sind, wie am besten aus Figur 6 erkennbar ist, im Bereich der Innenseite radiale Erhebungen 46 in Form von Noppen oder dergleichen vorgesehen, welche sich in die Außenoberfläche der Dichtmanschette 3 eindrücken können um einen gegeneinander fixierten Verbund zu bewirken.

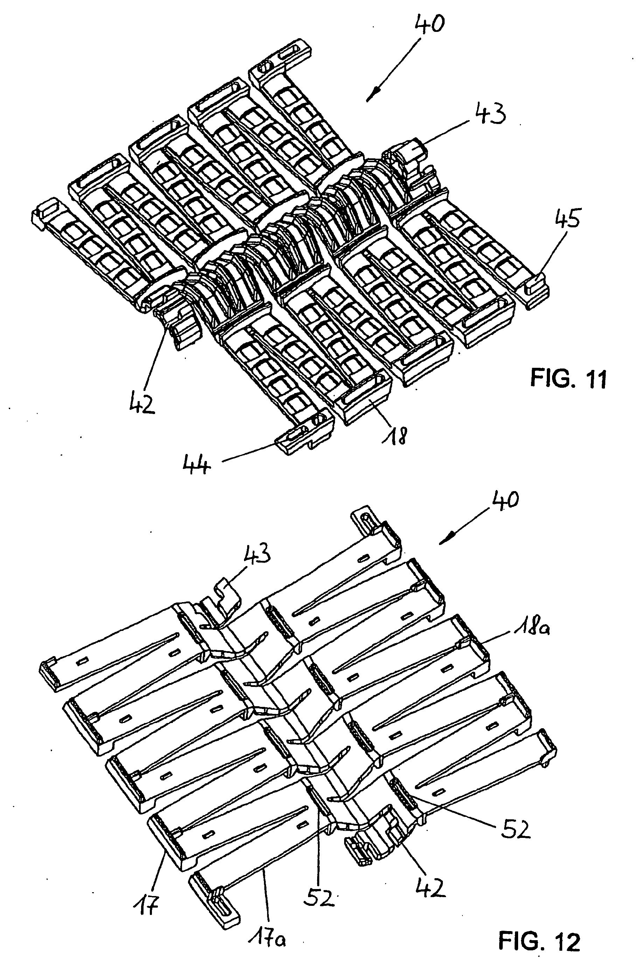

Die Figuren 11 und 12 zeigen eine ähnliche Ausführung wie die Figuren 6 und 7. Zur Vermeidung von Wiederholungen werden daher nur die Unterschiede näher angegeben, wobei für gleiche Teile gleiche Bezugszeichen Verwendung finden. Bei der Ausführung gemäß Figuren 11, 12 sind die im Mittelbereich vorgesehenen Steckorgane inform von Steckmuffe 42 und Steckzunge 43 so angeordnet, dass sie beim Zusammenbau der aufeinander folgenden Segmente 40 in Umfangsrichtung aneinander ansteckbar sind, was eine sinnfällige Montage ergibt. Die an den axialen Enden der Teilvorsprünge 17a vorgesehenen Steckorgane inform von Ösen 44 und Zapfen 45 sind hier quer zur mittleren Steckverbindung in radialer Richtung in Eingriff bringbar. Aus den Figuren 11 und 12 ist auch erkennbar, dass die an den axialen Enden der Vorsprünge 17 bzw. 17a vorgesehenen, die Innenschlitze verschließenden leistenförmigen Endstücke 18 nicht nur eine nach radial außen gerichtete Erhebung aufweisen, sondern auch eine nach radial innen gerichtete Erhebung. Diese ist im dargestellten Beispiel, wie am besten aus Figur 12 ersichtlich ist, als T-förmige Leiste 18a ausgebildet, deren Schenkel zum Eingriff mit zugeordneten Ausnehmungen einer Dichtmanschette 3 kommen können. Die zugeordnete Dichtmanschette 3 ist, wie aus Figur 13 ersichtlich ist, mit einer randseitig umlaufenden Nut 50 und hiervon abgehenden Einschnitten bzw. Einkerbungen 51 versehen, in welche die T-förmigen Leisten 18 der Vorsprünge 17, 17a eingreifen können. Dies begünstigt die Erzielung eines gemeinsam verformbaren, durch die Dichtmanschette 3 und die Fixiermanschette 8 gebildeten Verbundkörpers.

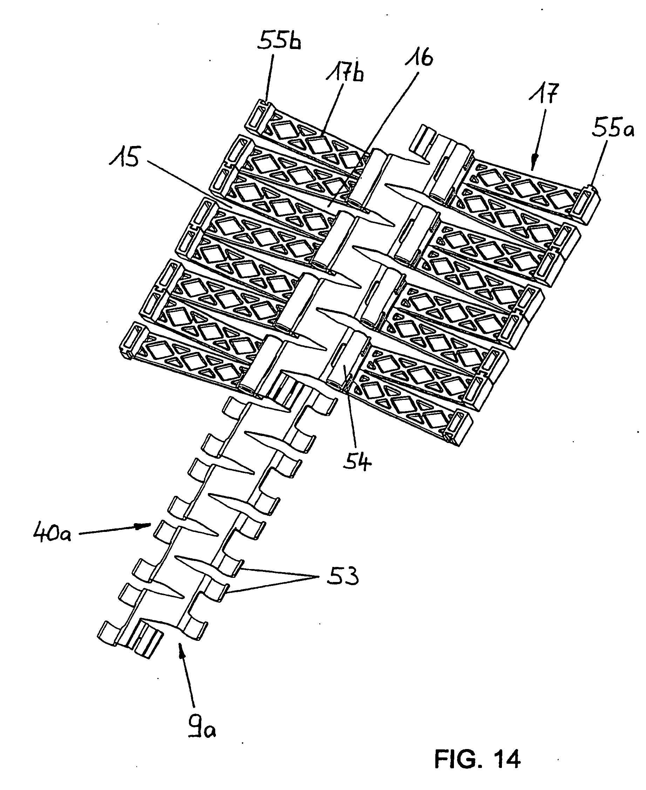

Die Figuren 11 und 12 zeigen auch, dass an den mittelbereichseitigen Enden der axialen Vorsprünge 17, 17a, das heißt im Anschlußbereich der Vorsprünge an den Mittelbereich durch Schwächungen, hier in Form von Durchbrüchen 52 gebildete Sollbiegebereiche vorgesehen sind. Es wäre natürlich auch denkbar, anstelle derartiger Sollbiegebereiche auch Gelenkverbindungen vorzusehen. Eine derartige Ausführung zeigt die Figur 14. Die Figur 14 zeigt eine den Mittelbereich 9 der Fixiermanschette 8 bildenden Materialstreifen 9a, der von beiden Seiten mit gegenläufigen, axialen Randeinschnitten versehen ist und von dem diese flankierende Gelenkklauen 53 abstehen. Zur Bildung der seitlichen Anlagebereiche 10, 11 sind zweischenklige Vorsprünge 17 vorgesehen, deren Schenkel an ihren mittelbereichseitigen Enden durch einen eine Gelenkachse bildenden Zylinderbereich 54 miteinander verbunden sind, der zur Bildung eines Scharniergelenks in zugeordnete Gelenkklauen 53 einrastbar ist. Die einander zugewandten Schenkel 17b der einander benachbarten, zweischenkeligen Vorsprünge 17 sind durch eine Steckverbindung miteinander verbindbar, so dass sich mit den Randeinschnitten des Materialstreifens 9a zu Innenschlitzen 16 sich ergänzende Schlitze ergeben. Durch die Schlitze zwischen den Schenkeln 17b der zweischenkligen Vorsprünge 17 ergeben sich hier bis zum Mittelbereich reichenden Randeinschnitte 15. Zur Bewerkstelligung der vorstehend genannten Verbindung sind die Schenkel 17b abwechselnd mit Steckvorsprüngen 55a und hierzu passenden Einsteckausnehmungen 55b versehen. Die zur Bildung der Gelenkachsen vorgesehenen Zylinderbereiche können zweckmäßig nach Art von Hohlwellen ausgebildet sein. Die Enden des den Mittelbereich bildenden Materialstreifens 9a können zur Bildung eines Rings miteinander verschweißt oder aneinander angesteckt werden. Bei der Ausführung gemäß Figur 14 wird der Materialstreifen 9a durch mehrere aneinander ansteckbare Segmente 40a gebildet, die Steckorgane können dabei den Steckorganen 42, 43 der Ausführung gemäß Figuren 11, 12 in etwa entsprechen. Die aus mehreren, aneinander festlegbaren Segmenten bestehenden Fixiermanschetten 8a bzw. 8b haben den gemeinsamen Vorteil, dass die gewünschte Größe durch die Anzahl der verwendeten Segmente veränderbar ist. Hierdurch ergibt sich daher eine sehr große Flexibilität.

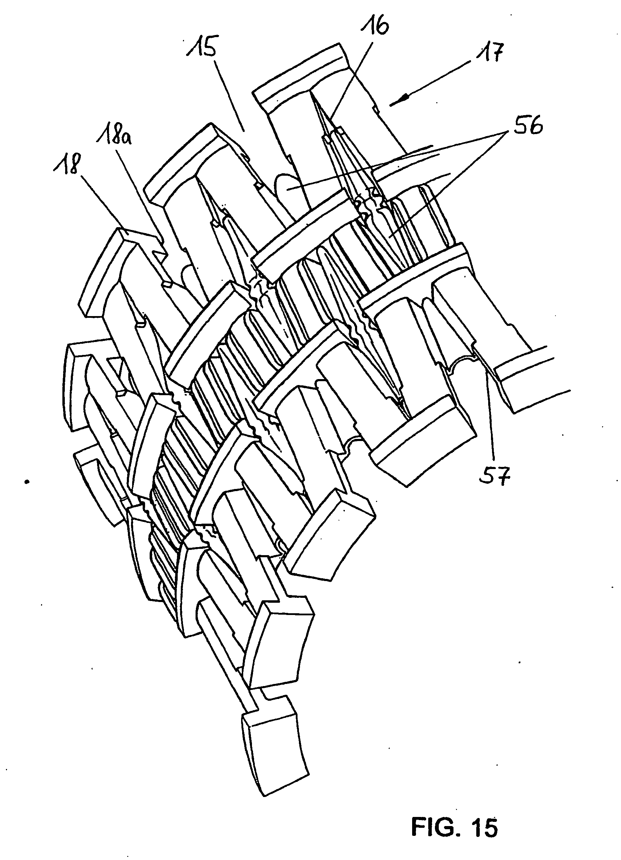

Ein weiterer Erfindungsgedanke kommt in den Figuren 15 bis 18 zum Ausdruck. Bei Ausführungen der hieraus entnehmbaren Art kann auf eine Dichtmanschette 3 verzichtet werden und dennoch eine dichte Verbindung erreicht werden. Der grundsätzliche Aufbau der Anordnung gemäß Figuren 15 bis 18 entspricht im Wesentlichen der Anordnung gemäß Figuren 10 und 11. Nachstehend werden daher zur Vermeidung von Wiederholungen im Wesentlichen die Unterschiede hervorgehoben, wobei für gleiche Teile gleiche Bezugszeichen Verwendung finden. Im Unterschied zur Anordnung gemäß Figuren 11, 12 finden hier keine durch eine Steckverbindung miteinander verbundenen Ringsegmente Verwendung, sondern ein an seinen Enden verschweißter oder verklebter oder insgesamt einteilig hergestellter Ring. Es wäre auch denkbar, den ohne Unterbrechung umlaufenden Ring durch Verschweißen oder Verkleben von aufeinander folgenden Segmenten zubilden. Bei der Ausführung gemäß Figuren 15 bis 17 sind die Dehnungsschlitze inform der Randeinschnitte 15 und Innenschlitze 16 durch als Faltenbalge ausgebildete Membranen 56 überbrückt. Diese bilden dementsprechend einen in sich beweglichen Verschluss.

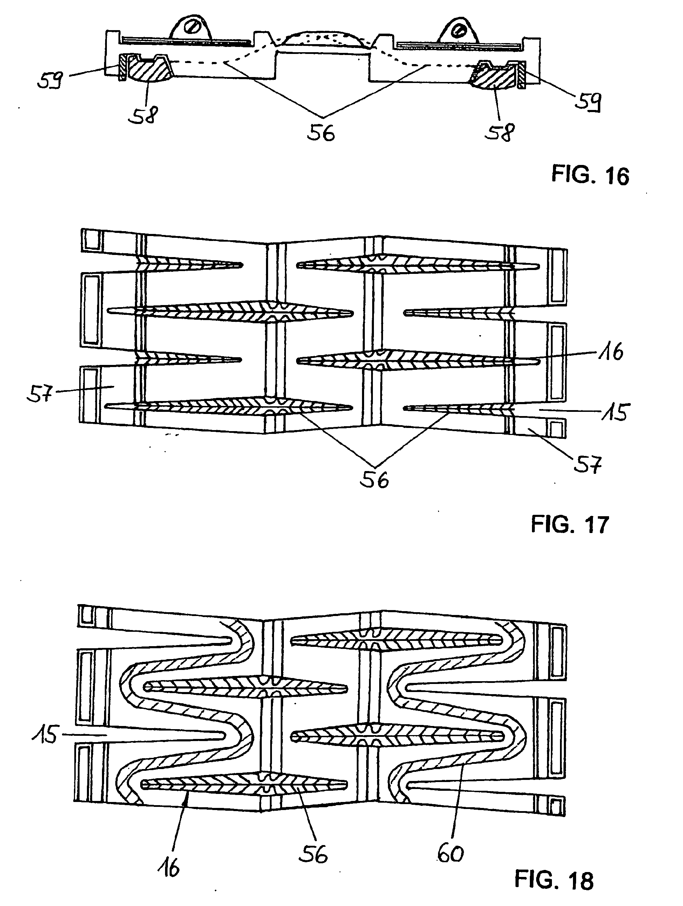

Im Bereich der voneinander abgewandten, axialen Enden der Vorsprünge 17 sind umlaufende Kanäle 57 vorgesehen, an denen die Membranen 56 enden. In die Kanäle 57 sind, wie am besten aus Figur 16 ersichtlich ist, umlaufende Dichtringe 58 einlegbar, die gegen die zugewandten Stirnseiten der faltenbalgartigen Membranen 56 drücken und dementsprechend den von den Membranen 56 eingeschlossenen Innenraum seitlich abdichten. Die Kanäle 57 sind in Eindrückrichtung der Dichtringe 58 konisch verengt, so dass die querschnittmäßig hieran angepassten Dichtringe 58, wenn sie in den zugeordneten Kanal 57 eingedrückt werden, an die offene Stirnseite Membranen 56 angedrückt werden, wie aus Figur 16 anschaulich ersichtlich ist. Im dargestellten Beispiel ist hierzu die den Membranen 56 benachbarte Seitenflanke der Kanäle 57 und Dichtringe 58 gegenüber der Eindrückrichtung geneigt. Die gegenüberliegende Seitenflanke der Kanäle 57 kann in radialer Richtung verlaufen. Dabei kann zur Stabilisierung der Dichtringe 58 in axialer Richtung hinter jedem Dichtring 58 ein nach Art eines Sprengrings ausgebildeter Haltering 59 platziert sein. Dieser kann am radial inneren Rand gezackt bzw. gezahnt ausgebildet sein, was die Herstellung einer zugfesten Verbindung erleichtert. Die Dicke der Dichtringe 58 ist so bemessen, dass diese in dichtende Anlage am Außenumfang des benachbarten Rohrs kommen. Damit ist der Stoßbereich zwischen den miteinander zu verbindenden Rohren 1, 2 zuverlässig abgedichtet, so dass auf eine Dichtmanschette verzichtet werden kann.

Bei der Ausführung gemäß Figur 18 sind nur die Innenschlitze 16 durch eine faltenbalgartige Membrane 56 überbrückt. Gleichzeitig ist jedem Anlagebereich 10,11 eine zwischen den inneren Enden der ohne Membrane bleibenden Randeinschnitte 15 und den äußeren Enden der durch eine. Membrane 56 überbrückten Innenschlitze 16 mäanderartig verlaufende Dichtung 60 eingelegt. Dabei kann es sich um eine endlose Dichtschnur handeln, die in einen zugeordneten Kanal eingelegt ist.

Vorstehend sind zwar einige Ausführungsbeispiele der Erfindung näher erläutert, ohne dass jedoch hiermit eine Beschränkung verbunden sein soll. Vielmehr stehen dem Fachmann eine Reihe von Möglichkeiten zur Verfügung, um den allgemeinen Gedanken der erfindungsgemäßen Lösung an die Verhältnisse des Einzelfalls anzupassen.

## Patentansprüche

1. Vorrichtung zum Verbinden von zwei unterschiedliche Außendurchmesser aufweisenden Rohren (1, 2) mit einer die Stoßstelle zwischen den einander zugewandten Endbereichen der Rohre (1, 2) überspannenden Manschettenanordnung, die zumindest eine Fixiermanschette (8, 8a), auf der den beiden Rohren (1, 2) zugeordnete, umlaufende Spannschellen (12, 13) aufgenommen sind, und vorzugsweise eine von der Fixiermanschette (8, 8a) umfasste Dichtmanschette (3) aufweist, wobei jede Manschette der Manschettenanordnung an die unterschiedlichen Außendurchmesser der Rohre (1, 2) anpassbare, den beiden Rohren (1, 2) zugeordnete, zylindrische Anlagebereiche (5, 6; 10, 11) aufweist, die jeweils durch einen in eine entsprechend der Durchmesserabstufung konische Form bringbaren Mittelbereich (7, 9) verbunden sind, wobei die Anlagebereiche (5, 6) der dem Außenumfang der beiden Rohre (1, 2) benachbarten Manschette an beiden Rohren (1,2) in direkte Anlage bringbar sind und die Anlagebereiche (10,11) der Fixiermanschette (8, 8a) den Spannschellen (12, 13) zugeordnete, umlaufende Aufnahmekanäle enthalten, und wobei die Fixiermanschette (8) als in sich geschlossener umlaufender Ring ausgebildet ist, der für eine dreidimensionale Formänderung eingerichtet ist, wobei der die Fixiermanschette (8) bildende Ring als Federkorb ausgebildet ist, der beidseitig mit über seinen Umfang verteilten, dem Mittelbereich (9) und den seitlichen Anlagebereichen (10, 11) zugeordneten, auf der ganzen Länge der Fixiermanschette (8) ausreichend Raum für deren dreidimensionale Formänderung gebenden, in axialer Richtung verlaufenden Schlitzen (15, 15a, 16) versehen ist und wobei der Mittelbereich (9) der Fixiermanschette (8) durch seitliche Sollbiegebereiche und/oder Gelenke mit den seitlichen Anlagebereichen (10,11) verbunden ist.

2. Vorrichtung nach Anspruch 1, **dadurch gekennzeichnet, dass** der die Fixiermanschette (8) bildende Federkorb beidseitig über seinen Umfang verteilte, randseitig offene, bis zum Mittelbereich (9) reichende Randeinschnitte (15) und im Wechsel hiermit angeordnete, randseitig geschlossene, zumindest über einen größeren Teil des Mittelbereichs (9) sich erstreckende Innenschlitze (16) aufweist, wobei die Randeinschnitte (15) der einen Seite den Innenschlitzen (16) der anderen Seite gegenüberliegend angeordnet sind.

3. Vorrichtung nach Anspruch 2, **dadurch gekennzeichnet, dass** durch die Randeinschnitte (15) voneinander getrennte, axiale Vorsprünge (17) gebildet werden, die im Bereich ihrer axial äußeren Enden ein den zugeordneten Innenschlitz (16) verschließendes, eine radiale Erstreckung aufweisendes Endstück (18) aufweisen.

4. Vorrichtung nach Anspruch 3, **dadurch gekennzeichnet, dass** die radiale Vorsprünge bildenden Endstücke (18) eine vorgesehene Dichtmanschette (3) stirnseitig umgreifen und/oder in zugeordnete Ausnehmungen der Dichtmanschette (3) eingreifen.

5. Vorrichtung nach Anspruch 3 oder 4, **dadurch gekennzeichnet, dass** die axialen Vorsprünge (17) auf ihrer Innenseite mit in eine zugeordnete Dichtmanschette (3) eindrückbaren radialen Erhebungen (46) versehen sind.

6. Vorrichtung nach einem der Ansprüche 1 - 5, **dadurch gekennzeichnet, dass** der Mittelbereich (9) seitliche Randstege (19) und einen Mittelsteg (20) aufweist, der ähnlich wie die seitlichen Anlagebereiche (10,11) im Bereich des radial inneren Endes des Randstegs (19) an diesen anschließt.

7. Vorrichtung nach einem der Ansprüche 1 - 6, **dadurch gekennzeichnet, dass** der die Fixiermanschette (8) bildende Federkorb aus einem streifenförmigen Guss- und/oder Stanzformling besteht, dessen Enden fest miteinander verbunden sind.

8. Vorrichtung nach einem der Ansprüche 1 - 7, **dadurch gekennzeichnet, dass** die Manschettenanordnung nur die Fixiermanschette (8) enthält und dass zumindest die über den Mittelbereich (9) der Fixiermanschette (8) sich erstreckenden Dehnungs- bzw. Stauchungsschlitze durch eine faltenbalgartige Membrane (56) überbrückt sind und dass jedem vom Mittelbereich (9) abstehenden Anlagebereich (10, 11) eine am zugeordneten Rohr (1, 2) zur Anlage kommende Dichtung (58 bzw. 60) zugeordnet ist.

9. Vorrichtung nach Anspruch 8, **dadurch gekennzeichnet, dass** nur die Innenschlitze (16) durch eine faltenbalgartige Membrane (56) überbrückt sind und dass zwischen den durch jeweils eine zugeordnete Membrane (56) überbrückten Innenschlitzen (16) und den freien Randeinschnitten (15) eine mäanderförmig verlaufende Dichtschnur (60) vorgesehen ist.

10. Vorrichtung nach Anspruch 8, **dadurch gekennzeichnet, dass** alle durch die Randeinschnitte (15) und die Innenschlitze (16) gebildeten Dehnungs- bzw. Stauchungsschlitze durch eine faltenbalgartige Membrane (56) überbrückt sind und dass im Bereich der vom Mittelbereich (9) abgewandten Enden der seitlichen Anlagebereiche (10,11) jeweils ein umlaufender, in einen zugeordneten Kanal (57) einlegbarer Dichtring (58) vorgesehen ist, der an den benachbarten, kanalseitig offenen Stirnseiten der den Dehnungsschlitzen zugeordneten Membranen (56) anliegt.

11. Vorrichtung nach Anspruch 10, **dadurch gekennzeichnet, dass** der Dichtring (58) und der zugeordnete Kanal (57) einen zur Kanalsohle hin sich verengenden Querschnitt aufweisen.

12. Vorrichtung nach einem der Ansprüche 3 - 11, **dadurch gekennzeichnet, dass** der die Fixiermanschette (8) bildende Federkorb aus mehreren, zu einem Ring zusammenschließbaren Ringsegmenten (40) besteht, wobei der Mittelbereich (9) und die axialen Vorsprünge (17) einander benachbarter Ringsegmente durch Steckverbindungen mit vorzugsweise quer zueinander verlaufenden Steckrichtungen aneinander ansteckbar und/oder miteinander verrastbar sind.

13. Vorrichtung nach einem der Ansprüche 1 - 12, **dadurch gekennzeichnet, dass** der Mittelbereich (9) gegenüber den seitlichen Anlagebereichen (10.11) erhöht ist.

14. Vorrichtung zum Verbinden von zwei unterschiedliche Außendurchmesser aufweisenden Rohren (1, 2) mit einer die Stoßstelle zwischen den einander zugewandten Endbereichen der Rohre (1, 2) überspannenden Manschettenanordnung, die zumindest eine Fixiermanschette (8, 8a), auf der den beiden Rohren (1, 2) zugeordnete, umlaufende Spannschellen (12, 13) aufgenommen sind, und vorzugsweise eine von der Fixiermanschete (8, 8a) umfasste Dichtmanschette (3) aufweist, wobei jede Manschette der Manschettenanordnung an die unterschiedlichen Außendurchmesser der Rohre (1, 2) anpassbare, den beiden Rohren (1, 2) zugeordnete, zylindrische Anlagebereiche (5, 6; 10, 11) aufweist, die jeweils durch einen in eine entsperchend der Durchmesserabstufung konische Form bringbaren Mittelbereich (7, 9) verbunden sind, wobei die Anlagebereiche (5, 6) der dem Außenumfang der beiden Rohre (1, 2) benachbarten Manschette an beiden Rohren (1, 2) in direkte Anlage bringbar und die Anlagebereiche (10, 11) der Fixiermanschette (8, 8a) den Spannschellen (12, 13) zugeordnete, umlaufende Aufnahmekanäle enthalten, und wobei die Fixiermanschette (8) als in sich geschlossener umlaufender Ring ausgebildet ist, der für eine dreidimensionale Formänderung eingerichtet ist, wobei die Fixiermanschette (8a) aus in Umfangsrichtung aufeinander folgenden, mit Drehfreiheitsgrad bezüglich einer radialen Achse aneinander anschließbaren Umfangssegmenten (30) aufgebaut ist, wobei die Umfangssegmente (30) jeweils einen erhöhten Mittelsteg (31) aufweisen und hiermit unter Bildung eines Drehgelenks in Umfangsrichtung aneinander ansteckbar sind und wobei der Mittelsteg (31) über Sollbiegebereiche mit seitlich abstehenden, die Anlagebereiche (10,11) bildenden Seitenflügeln (32) verbunden ist.

15. Vorrichtung nach Anspruch 14, **dadurch gekennzeichnet, dass** der Mittelsteg (31) der Umfangssegmente (30) einerseits mit einer Steckmuffe (33) und andererseits mit einer hieran angepassten Steckzunge (34) versehen ist, die konvex gebogene Längsseiten (35) aufweist.

16. Vorrichtung nach Anspruch 14 oder 15, **dadurch gekennzeichnet, dass** die Seitenflügel (32) eine radiale Erstreckung aufweisende Vorsprünge (36) aufweisen, die in zugeordnete Ausnehmungen und/oder Einkerbungen einer Dichtmanschette (3) zum Eingriff bringbar sind.

17. Vorrichtung nach einem der Ansprüche 1 - 16, **dadurch gekennzeichnet, dass** die Spannschellen (12,13) jeweils aus wenigstens zwei Segmenten (13a, 13b) bestehen, die zusammen einen Bogenwinkel von mehr als 360° ergeben, wobei ein Segment (13b) im Bereich eines Endes mit wenigstens einem das andere Segment (13a) umgreifenden Spanngurt (25) und im Bereich des anderen Endes mit wenigstens einem dem zugewandten freien Ende eines Spanngurts (25) zugeordneten Halter oder Spanner (24) versehen ist.

18. Vorrichtung nach einem der Ansprüche 1 - 7 und 12 - 17, **dadurch gekennzeichnet, dass** eine Dichtmanschette (3) vorgesehen ist, die im Bereich ihrer axialen Enden eine umlaufende Nut (50) und/oder über den Umfang verteilte Einkerbungen (51) aufweist, in die zugeordnete, radiale Vorsprünge (18a, 36) der Fixiermanschette (8) eingreifen.

19. Vorrichtung nach Anspruch 18, **dadurch gekennzeichnet, dass** die Dichtmanschette (3) einen Anschlag (4) für das den größeren Außendurchmesser aufweisende Rohr (1) aufweist.

## Claims

1. A device for connecting two pipes (1, 2) with different external diameters, comprising a sleeve arrangement spanning the abutment point between the end sections of the pipes (1, 2) facing each other, such sleeve arrangement comprising at least one fixing sleeve (8, 8a) accommodating circumferential tensioning clips (12, 13) which are associated with the two pipes (1, 2), and preferably a sealing sleeve (3), encompassed by the fixing sleeve (8, 8a), with each sleeve of the said sleeve arrangement having cylindrical contact areas (5, 6; 10,11) associated with the two pipes (1, 2) and adjustable to the different diameters of the pipes (1, 2), such contact areas being connected by a middle section (7, 9) which according to the difference in diameter can be brought into a conical shape, with the contact areas (5, 6) of the sleeve adjacent to the external circumference of the two pipes (1, 2) being movable into direct contact with both pipes (1, 2), and the contact areas (10, 11) of the fixing sleeve (8, 8a) comprising circumferential receiving channels associated with the said tensioning clips (12, 13), and with the fixing sleeve (8) being designed as a closed, circumferential ring designed for a three-dimensional change of shape, with the ring forming the fixing sleeve (8) being designed as a spring cage which is on either side provided with axial slots (15, 15a, 16) distributed around its entire circumference and associated with the middle section (9) and the lateral contact areas (10, 11), and allowing sufficient space along the entire length of the fixing sleeve (8) for the latter to undergo a three-dimensional change in shape, and with the middle section (9) of the fixing sleeve (8) being connected with the lateral contact areas (10, 11) by lateral predetermined bending areas and/or joints.

2. A device in accordance with Claim 1, **characterized in that** either side of the spring cage forming the fixing sleeve (8) is provided with rim slots (15) which are open at the rim and distributed around its circumference, and extend to the middle section (9), and, alternating therewith, with inner slots (16) which are closed at the rim of the said spring cage and extend at least across a major part of the middle section (9), with the rim slots (15) of one side being arranged opposite the inner slots (16) of the other side.

3. A device in accordance with Claim 2, **characterized in that** due to the rim slots (15) mutually separated axial projections (17) are formed which in the region of their axially outer ends are provided with an end section (18) extending radially and closing the associated inner slot (16).

4. A device in accordance with Claim 3, **characterized in that** the end sections (18) forming radial projections embrace an associated sealing sleeve (3) at its end face and/or engage associated recesses of the said sealing sleeve (3).

5. A device in accordance with Claims 3 or 4, **characterized in that** the axial projections (17) on their inner side are provided with radial elevations (46) which can be pressed into an associated sealing sleeve (3).

6. A device in accordance with any of the Claims 1 to 5, **characterized in that** the middle section (9) comprises lateral rim webs (19) and a middle web (20) which, similar to the lateral contact areas (10,11), in the area of the radial inner end of the lateral rim web (19) joins the latter.

7. A device in accordance with any of the Claims 1 to 6, **characterized in that** the spring cage forming the fixing sleeve (8) consists of a strip-type casting and/or punched part whose ends are firmly connected with each other.

8. A device in accordance with any of the Claims 1 to 7, **characterized in that** the sleeve arrangement comprises only the fixing sleeve (8) and that at least the expansion and compression slots, respectively, extending across the middle section (9) of the fixing sleeve (8), are bridged by a bellows-type membrane (56), and further that each contact area (10, 11) projecting from the middle section (9) is associated with a seal (58 and 60, respectively) contacting the associated pipe (1,2).

9. A device in accordance with Claim 8, **characterized in that** only the inner slots (16) are bridged by a bellows-type membrane (56) and that a meander-type sealing string (60) is provided between the inner slots (16) bridged by an associated membrane (56), and the free rim slots (15).

10. A device in accordance with Claim 8, **characterized in that** all expansion and/or compression slots formed by the rim slots (15) and the inner slots (16) are bridged by a bellows-type membrane (56), and that in the area of the ends of the lateral contact areas (10, 11) pointing away from the middle section (9) provision is made for a circumferential sealing ring (58) which is insertable into an associated channel (57), such sealing ring contacting the end faces, which are open on the channel side, of the adjacent membranes (56) associated with the expansion slots.

11. A device in accordance with Claim 10, **characterized in that** the sealing ring (58) and the associated channel (57) have a cross-section narrowing towards the channel bottom.

12. A device in accordance with any of the Claims 3 to 11, **characterized in that** the spring cage forming the fixing sleeve (8) consists of several ring segments (40) which can be joined to form a ring, with the middle section (9) and the axial projections (17) of mutually adjacent ring segments being insertable into each other and/or lockable with each other by means of plug-type connections preferably extending in mutually plug-in transverse directions.

13. A device in accordance with any of the Claims 1 to 12, **characterized in that** the middle section (9) is elevated relative to the lateral contact areas (10, 11).

14. A device for connecting two pipes (1, 2) with different external diameters, comprising a sleeve arrangement spanning the abutment point between the end sections of the pipes (1, 2) facing each other, such sleeve arrangement comprising at least one fixing sleeve (8, 8a) accommodating circumferential tensioning clips (12, 13) which are associated with the two pipes (1, 2), and preferably a sealing sleeve (3), encompassed by the fixing sleeve (8, 8a), with each sleeve of the said sleeve arrangement having cylindrical contact areas (5, 6; 10,11) associated with the two pipes (1, 2) and adjustable to the different diameters of the pipes (1, 2), such contact areas being connected by a middle section (7, 9) which according to the difference in diameter can be brought into a conical shape, with the contact areas (5, 6) of the sleeve adjacent to the external circumference of the two pipes (1, 2) being movable into direct contact with both pipes (1, 2), and the contact areas (10, 11) of the fixing sleeve (8, 8a) comprising circumferential receiving channels associated with the said tensioning clips (12, 13), and with the fixing sleeve (8a) being composed of circumferential segments (30) following one another in a circumferential direction and adjoinable to one another with a rotary degree of freedom relative to a radial axis, with each of the said circumferential segments (30) having an elevated middle web (31) with which they are insertable to one another in a circumferential direction thus forming a swivel joint, and with the middle web (31) being connected via predetermined bending areas with laterally projecting lateral wings (32) forming the contact areas (10, 11).

15. A device in accordance with Claim 14, **characterized in that** the middle web (31) of the circumferential segments (30) is on one side provided with a plug-in receptacle (33) and on the other side with a plug-in tongue (34) adapted thereto which comprises convexly bent longitudinal sides (35).

16. A device in accordance with Claim 14 to 15, **characterized in that** the lateral wings (32) are provided with radially extending projections (36) which are engageable with associated recesses and/or notches of a sealing sleeve (3).

17. A device in accordance with any of the Claims 1 to 16, **characterized in that** each of the tensioning clips (12, 13) consist of at least two segments (13a, 13b) adding up to an angle of arc of more than 360°, with one segment (13b) in the area of one end thereof being provided with at least one tensioning belt (25) embracing the other segment (13a), and in the area of the other end thereof with at least one holder or tensioner (24) associated with the adjacent free end of a tensioning belt (25) facing the latter.

18. A device in accordance with any of the Claims 1 - 7 and 12 to 17, **characterized in that** provision is made for a sealing sleeve (3) which in the area of its axial ends is provided with a circumferential groove (50) and/or notches (51) distributed around its circumference which are engaged by associated radial projections (18a, 36) of the fixing sleeve (8).

19. A device in accordance with Claim 18, **characterized in that** the sealing sleeve (3) is provided with a stop face (4) for the pipe (1) having the larger external diameter.

## Revendications

1. Dispositif de raccordement de deux tuyaux (1, 2) présentant des diamètres extérieurs différents, comprenant un ensemble de manchons qui s'étend sur le joint entre les zones d'extrémité des tuyaux (1, 2), tournées l'une vers l'autre et qui comprend au moins un manchon de fixation (8, 8a) sur lequel sont reçus des colliers de serrage (12, 13) circonférentiels associés aux deux tuyaux (1, 2), ainsi que de préférence un manchon d'étanchéité (3) embrassé par ledit manchon de fixation (8, 8a), chacun des manchons de l'ensemble de manchons présentant des zones d'appui cylindriques (5, 6 ; 10, 11 ) qui sont adaptables aux diamètres extérieurs différents des tuyaux (1, 2) et associées aux deux tuyaux (1, 2) et qui sont reliées entre elles respectivement par une zone centrale (7, 9) à laquelle peut être conférée une forme conique conformément à la gradation du diamètre, lesdites zones d'appui (5, 6) du manchon adjacent à la circonférence extérieure des deux tuyaux (1, 2) pouvant être mises en appui direct sur les deux tuyaux (1, 2) et les zones d'appui (10, 11 ) du manchon de fixation (8, 8a) comprenant des canaux de réception circonférentiels associés aux colliers de serrage (12, 13), et le manchon de fixation (8) étant réalisé comme une bague circonférentielle fermée en elle-même qui est conçue pour une modification de forme tridimensionnelle, la bague formant ledit manchon de fixation (8) étant réalisée comme cage faisant ressort qui est pourvue, de part et d'autre, de fentes (15, 15a, 16) qui sont réparties sur sa circonférence, associées à ladite zone centrale (9) et aux zones latérales d'appui (10, 11), laissent un espace suffisant - sur toute la longueur du manchon de fixation (8) - pour la modification de forme tridimensionnelle de celui-ci et s'étendent dans la direction axiale, et ladite zone centrale (9) du manchon de fixation (8) étant reliée aux zones latérales d'appui (10, 11) par des zones latérales destinées à la flexion et/ou par des articulations.

2. Dispositif selon la revendication 1, **caractérisé par le fait que** la cage faisant ressort qui forme ledit manchon de fixation (8) présente, de part et d'autre, des incisions de bord (15) qui sont réparties sur sa circonférence, ouvertes sur le bord et s'étendent jusqu'à ladite zone centrale (9), ainsi que, disposées en alternance avec celles-ci, des fentes intérieures (16) qui sont fermées sur le bord et s'étendent au moins sur une plus grande partie de ladite zone centrale (9), lesdites incisions de bord (15) de l'un des côtés étant disposées en regard des fentes intérieures (16) de l'autre côté.

3. Dispositif selon la revendication 2, **caractérisé par le fait que** des projections axiales (17) séparées les unes des autres sont formées par lesdites incisions de bord (15) et présentent, au niveau de leurs extrémités axialement extérieures, une pièce terminale (18) fermant la fente intérieure (16) associée et présentant une extension radiale.

4. Dispositif selon la revendication 3, **caractérisé par le fait que** lesdites pièces terminales (18) formant des projections radiales s'engagent frontalement sur un manchon d'étanchéité (3) prévu et/ou s'engagent dans des évidements associés du manchon d'étanchéité (3).

5. Dispositif selon la revendication 3 ou 4, **caractérisé par le fait que** les projections axiales (17) sont pourvues, sur leur face intérieure, de protubérances radiales (46) aptes à être enfoncées dans un manchon d'étanchéité (3) associé.

6. Dispositif selon l'une quelconque des revendications 1 à 5, **caractérisé par le fait que** ladite zone centrale (9) présente des entretoises de bord (19) et une entretoise médiane (20) qui, d'une façon semblable que les zones latérales d'appui (10, 11), joint l'entretoise de bord (19) au niveau de l'extrémité radialement intérieure de celle-ci.

7. Dispositif selon l'une quelconque des revendications 1 à 6, **caractérisé par le fait que** la cage faisant ressort qui forme ledit manchon de fixation (8) se compose d'une pièce moulée et/ou découpée en forme de stries, dont les extrémités sont solidarisées entre elles.

8. Dispositif selon l'une quelconque des revendications 1 à 7, **caractérisé par le fait que** ledit ensemble de manchons ne comprend que le manchon de fixation (8) et qu'au moins les fentes de dilatation ou bien de compression s'étendant sur ladite zone centrale (9) du manchon de fixation (8) sont comblées par une membrane (56) de type soufflet et qu'un joint d'étanchéité (58 ou bien 60) qui vient en appui sur le tuyau associé (1, 2) est associé à chaque zone d'appui (10, 11) faisant saillie de la zone centrale (9).

9. Dispositif selon la revendication 8, **caractérisé par le fait que** seulement les fentes intérieures (16) sont comblées par une membrane (56) de type soufflet et qu'un cordon d'étanchéité (60) s'étendant en méandre est prévu entre lesdites fentes intérieures (16) comblées par respectivement une membrane associée (56) et les incisions de bord (15) libres.

10. Dispositif selon la revendication 8, **caractérisé par le fait que** l'ensemble des fentes de dilatation ou bien de compression formées par lesdites incisions de bord (15) et par lesdites fentes intérieures (16) sont comblées par une membrane (56) de type soufflet et qu'au niveau des extrémités des zones latérales d'appui (10, 11), qui montrent dans la direction opposée à la zone centrale (9), est prévue respectivement une bague d'étanchéité circonférentielle (58) qui est apte à être insérée dans un canal (57) associé et qui s'appuie sur les faces frontales voisines et ouvertes du côte du canal, des membranes (56) associées aux fentes de dilatation.

11. Dispositif selon la revendication 10, **caractérisé par le fait que** ladite bague d'étanchéité (58) et le canal (57) associé présentent une section transversale se rétrécissant vers le fond du canal.

12. Dispositif selon l'une quelconque des revendications 3 à 11, **caractérisé par le fait que** la cage faisant ressort qui forme ledit manchon de fixation (8) se compose d'une pluralité de segments d'anneau (40) pouvant être assemblés pour former un anneau, la zone centrale (9) et les projections axiales (17) de segments d'anneau voisins les uns des autres pouvant être attachées les unes aux autres par emboîtement par le biais d'assemblages à emboîtement avec des directions d'emboîtement de préférence transversales les unes aux autres et/ou pouvant être encliquetées entre elles.

13. Dispositif selon l'une quelconque des revendications 1 à 12, **caractérisé par le fait que** ladite zone centrale (9) est en relief par rapport aux zones latérales d'appui (10, 11).

14. Dispositif de raccordement de deux tuyaux (1, 2) présentant des diamètres extérieurs différents, comprenant un ensemble de manchons qui s'étend sur le joint entre les zones d'extrémité des tuyaux (1, 2), tournées l'une vers l'autre et qui comprend au moins un manchon de fixation (8, 8a) sur lequel sont reçus des colliers de serrage (12, 13) circonférentiels associés aux deux tuyaux (1, 2), ainsi que de préférence un manchon d'étanchéité (3) embrassé par ledit manchon de fixation (8, 8a), chacun des manchons de l'ensemble de manchons présentant des zones d'appui cylindriques (5, 6 ; 10, 11) qui sont adaptables aux diamètres extérieurs différents des tuyaux (1, 2) et associées aux deux tuyaux (1, 2) et qui sont reliées entre elles respectivement par une zone centrale (7, 9) à laquelle peut être conférée une forme conique conformément à la gradation du diamètre, lesdites zones d'appui (5, 6) du manchon adjacent à la circonférence extérieure des deux tuyaux (1, 2) pouvant être mises en appui direct sur les deux tuyaux (1, 2) et les zones d'appui (10, 11) du manchon de fixation (8, 8a) comprenant des canaux de réception circonférentiels associés aux colliers de serrage (12, 13), et le manchon de fixation (8) étant réalisé comme une bague circonférentielle fermée en elle-même qui est conçue pour une modification de forme tridimensionnelle, ledit manchon de fixation (8a) étant réalisé à partir de segments circonférentiels (30) qui se succèdent dans la direction circonférentielle et peuvent être joints les uns aux autres avec un degré de liberté de rotation par rapport à un axe radial, lesdits segments circonférentiels (30) présentant chacun une entretoise médiane élevé (31) et pouvant être attachés par celle-ci les uns aux autres dans la direction circonférentielle tout en formant un joint rotatif, et ladite entretoise médiane (31) étant reliée via des zones destinées à la flexion à des ailes latérales (32) faisant saillie latéralement et formant les zones d'appui (10, 11).

15. Dispositif selon la revendication 14, **caractérisé par le fait que** ladite entretoise médiane (31) des segments circonférentiels (30) est pourvue d'un manchon à emboîtement (33) d'un côté et d'une languette à emboîter (34) de l'autre côté qui est adaptée à celui-ci et présente des faces latérales (35) courbées de façon convexe.

16. Dispositif selon la revendication 14 ou 15, **caractérisé par le fait que** les ailes latérales (32) présentent des projections (36) ayant une extension radiale, qui peuvent être engagées dans des évidements et/ou entailles associés d'un manchon d'étanchéité (3).

17. Dispositif selon l'une quelconque des revendications 1 à 16, **caractérisé par le fait que** lesdits colliers de serrage (12, 13) se composent chacun d'au moins deux segments (13a, 13b) qui donnent ensemble un angle d'arc supérieur à 360°, un segment (13b) étant pourvu, au niveau d'une extrémité, d'au moins une courroie de serrage (25) entourant l'autre segment (13a) et, au niveau de l'autre extrémité, d'au moins un support ou organe de serrage (24) associé à l'extrémité libre d'une courroie de serrage (25), qui est tournée vers lui.

18. Dispositif selon l'une quelconque des revendications 1 à 7 et 12 à 17, **caractérisé par le fait que** l'on prévoit un manchon d'étanchéité (3) qui, au niveau de ses extrémités axiales, présente une rainure circonférentielle (50) et/ou des entailles (51) réparties sur la circonférence dans lesquelles s'engagent des projections radiales (18a, 36) associées du manchon de fixation (8).

19. Dispositif selon la revendication 18, **caractérisé par le fait que** ledit manchon d'étanchéité (3) présente une butée (4) pour le tuyau (1) ayant le diamètre extérieur plus important.
